# EUROPEAN PATENT SPECIFICATION

(11) **EP 3 709 608 B1**
(45) Date of publication and mention of the grant of the patent: **04.10.2023**
(21) Application number: 19161995.6
(22) Date of filing: 11.03.2019
(51) Int. Cl.: H04L 61/4552, H04L 61/5092, H04W 84/18

(54) **METHOD AND AD-HOC NETWORK FOR SYNCHRONIZING DATA**
VERFAHREN UND AD-HOC-NETZWERK ZUR SYNCHRONISIERUNG VON DATEN
PROCÉDÉ ET RÉSEAU AD HOC POUR SYNCHRONISER DES DONNÉES

(43) Date of publication of application: 16.09.2020
(73) Proprietor: Rohde & Schwarz GmbH & Co. KG, 81671 München (DE)
(72) Inventor: Baessler, Andreas, 81671 München (DE)
(74) Representative: Prinz & Partner mbB

(56) References cited:
- US-A1- 2007 127 457
- "IEEE P802.11s/D0.04 - Draft Amendment to Standard for Information Technology - Telecommunications and Information Exchange Between Systems - LAN/MAN Specific Requirements - Part 11: Wireless Medium Access Control (MAC) and physical layer (PHY) specifications: Amendment: ESS Mesh Networking", IEEE, PISCATAWAY, NJ, USA, 7 June 2007 (2007-06-07), XP040429883,
- SEUNGJAE LEE ET AL: "Selective Route-Request Scheme for On-demand Routing Protocols in Ad Hoc Networks", 1 January 2005 (2005-01-01), AD-HOC, MOBILE, AND WIRELESS NETWORKS LECTURE NOTES IN COMPUTER SCIENCE;;LNCS, SPRINGER, BERLIN, DE, PAGE(S) 153 - 163, XP019020612, ISBN: 978-3-540-29132-9 * section 3.2 *

## Description

The invention relates to a method for synchronizing data in an ad-hoc network. Further, the invention relates to an ad-hoc network for synchronizing data.

In the state of the art, mobile or rather wireless networks such as mobile ad-hoc networks (MANET) are known that comprise several nodes that communicate with each other. These networks typically comprise several nodes or rather participants that communicate with each other in order to exchange data packets. The data packets are exchanged between the nodes that all have a dedicated address. This ensures that the communication among these nodes is structured since each node has its own address. However, the addressing is complicated since mobile ad-hoc networks are dynamic in nature, which means that the nodes will enter or leave the network randomly so that (re-)addressing of the nodes is required.

Typically, the mobile ad-hoc networks known so far comprise master/slave nodes which means that at least one node has a superior function compared to the other nodes, namely the slave nodes. For instance, the master node comprises the respective address data that shall be used by the nodes of the network. Accordingly, the master node allocates the addresses to the respective slave nodes.

In order to avoid any failures in case of a leaving master node, at least one of the slave nodes becomes a partial superior function as this specific slave node is chosen to become the following master node when the current master node leaves the network. Thus, it shall be ensured that the network always comprises one master node.

However, it turned out that such networks are less robust against failure of the master node and/or the following master node.

In IEEE P802.11s/D0.04 - Draft Amendment to Standard for Information Technology - Telecommunications and Information Exchange Between Systems - LAN/MAN Specific Requirements - Part 11: Wireless Medium Access Control (MAC) and physical layer (PHY) specifications: Amendment ESS Mesh Networking", a IEEE 802.11 Wireless LAN (WLAN) Mesh and the communication among participants is described, namely a MID message processing according to which a validity time must be computed from a field of a message header by means of the receiving participant.

Accordingly, there is a need for a method as well as a network that ensure at least more robustness.

The invention provides a method for synchronizing data in an ad-hoc network as defined in claim 1.

Further, the invention provides an ad-hoc network for synchronizing data as defined in claim 8.

The basic idea is to provide nodes that are equal with regard to their hierarchy in the network. In other words, no master node is provided as the nodes share their database content among each other. In fact, the nodes of the network harmonize themselves (automatically) as they compare at least their respective time information in order to synchronize deletion of the extended portion of the database, also called purging or rather purge of database, so as to renew the database content by deleting database content of nodes that have already left the respective network. Hence, the risk of address collisions can be reduced as information with regard to former nodes are deleted.

According to an aspect, the extended portion of the database comprises all content received from other nodes of the network. The respective content may be received from the other nodes of the network wherein each node may store the respective database content in the database. Hence, the database of all nodes may have the same content in a synchronized state.

If the databases of the nodes are not synchronized, a synchronizing step may be performed to synchronize the respective data.

According to the invention, the database comprises address data. Thus, the extended portion of the database relates to the address data of the other nodes in the network. Put another way, each node receives the address information or rather address data of the other nodes in the network.

The invention provides that the first node receives the time information from another node. Accordingly, the nodes in the network communicate with each other while exchanging the respective time information. In an example not forming part of the claimed invention the time information may be set manually by a user or rather manufacturer. Therefore, the time information may correspond to an initial time information that is used for triggering the purge of database(s).

The time information may correspond to a purge countdown. The purge countdown indicates when the extended portion of the database shall be deleted, namely the purging or rather the purge of database. The purge countdown may be used by networks that are not synchronized in time. Thus, no absolute time information is required.

Further, the time information may be an absolute time. An absolute time can be used as the time information for time synchronized network(s) as the time synchronization of the nodes in the network ensures that the nodes are enabled to work with absolute times, namely the synchronized absolute time that applies for all nodes.

Particularly, the time information includes a time interval. Accordingly, a certain deviation is still acceptable. Particularly, the time interval is included when the time information corresponds to the purge countdown. The purging takes place at substantially the same time wherein the respective deviation is assigned to the time interval included in the time information. In fact, this simplifies the overall synchronization, as it is not mandatory to have an absolute exactness that would require additional efforts and costs without any benefit with respect to the operating principle.

According to the invention, the second node adapts the time information, namely its own time information, provided that the time information received is assigned to an earlier time than its own time information. Thus, the second node is configured to adapt the time information, namely its own time information, provided that the time information received is assigned to an earlier time than its own time information. The receiving node, namely the second node, generally compares the received time information with its own one in order to identify the time information that is the closest one. This ensures that all nodes communicating in the same way as outlined above are enabled to identify the time information to be used for the purge of database such that deleting the extended portion of the database takes place substantially at the same time.

Furthermore, the nodes may synchronize their database contents after deleting the extended portion of the database. Thus, the nodes are configured to synchronize their database contents after deleting the extended portion of the database. The synchronizing step ensures that the database content of the respective databases, for instance the address data, is updated in a synchronized manner so that all nodes of the network have the same database content.

As already mentioned, all nodes in the network are equal so that the network is more robust against failure of single nodes.

Another aspect provides that the first node and the second node exchange data packets containing hash values of the database to be synchronized, and wherein each node compares the hash value received with the hash value assigned to its own database, in particular wherein the synchronizing is initiated if the hash values are different. Hence, the respective nodes are configured to exchange data packets that contain hash values of the database to be synchronized, namely their respective databases. Each node is further configured to compare the hash value received with the hash value assigned to its own database. The hash values are used to identify whether the content of the databases are equal or not. If the hash values are different, the synchronizing is initiated. Hence, the database content of the respective databases of the nodes communicating with each other is exchanged and synchronized in order to ensure that all nodes comprise the same database content.

Further, the nodes of the network only communicate with direct neighbors in the network. The direct neighbors are also called 1-hop neighbors. Thus, the network may generally correspond to a mobile ad-hoc network (MANET). The communication between the several nodes of the network may be assigned to a typical network routing information used by the network, particularly a MANET routing information.

In general, the hash-values assigned to the databases may be exchanged by specific data packets exchanged. These data packets are also called hello data packets. Generally, the hello packets are periodically transmitted to establish and maintain neighbor relationships between neighbored nodes, namely relationships to the next neighbors (1-hop neighborhood).

The receiving node, namely the one that receives the hello data packet, verifies whether a bidirectional link is provided to the transmitting node. For this purpose, the typical network routing information is used, particularly the MANET routing information.

In case of an asymmetric link, the packet received is discarded.

In case of a valid data packet, the receiving node compares the hash value received with the hash value assigned to its own database. If the hash values are different, the synchronizing step is initiated.

Generally, data packets, for instance beacon data packets, are exchanged during the synchronizing step wherein the respective data packets comprise all or at least a part of the database entries. Hence, the database content is exchanged at least partly by the beacon data packets transmitted.

The data packets, namely the beacon data packets, are transmitted until all neighboring nodes (re-)send a data packet with the same hash value, for instance a hello data packet or rather a beacon data packet with the same hash value.

For deleting database content that relates to former nodes of the network, the databases, particularly the extended portions of the databases, of each node are purged regularly, for instance in a periodical manner. This ensures that old data is deleted wherein the old data is assigned to nodes that do not belong to the network anymore.

The synchronizing overhead is reduced to a minimum since all nodes delete the extended portions of the databases (purge of databases) substantially at the same time.

This (synchronized) purging is ensured by exchanging the time information since a time for purging is exchanged among the nodes such that a common time is evaluated. The time information may correspond to a purge countdown, for instance a time value given in seconds. Alternatively, an absolute time may be used as time information, for instance in a time synchronized network.

The time information may be exchanged while transmitting the beacon data packets. In other words, the time information may be contained in the beacon data packets.

The receiving node, namely the one that receives the beacon data packet, extracts the time information and compares the time information received with its own one. If the received time information is sooner than the own time information, the receiving node adapts its own time information appropriately such that the soonest one relates to the adapted time information.

The time information is exchanged between all nodes of the network. This ensures that all nodes have the same purging information.

Accordingly, the purging of the databases as well as the database content is synchronized among the nodes of the network.

Afterwards, each node transmits only data packets that contain information of the respective transmitting node, namely its own information such as address information. The data packets transmitted corresponds to beacon data packets.

The data packets are exchanged for several intervals.

During this time, the nodes only accept data packets of direct neighbors (1-hop nodes). Hence, the databases are filled up and synchronized among the nodes.

In case of an address collision, each of the nodes communicating with each other selects a new address. For doing so, the node having the lower hardware identification (ID) starts to select a new address, for instance an address assigned to the lower part of the address pool. The other node, namely the one with the higher hardware ID, also selects a new address, for instance an address assigned to the upper part of the address pool. Thus, an occurring address collision is solved appropriately.

Generally, the network as well as the method use a certain protocol for communicating purposes.

Furthermore, the network as well as the method are more efficient as the databases of each node are synchronized periodically. In fact, the overhead is minimized resulting in a more efficient protocol.

The protocol is more robust since all nodes are equal. In other words, no node has a superior role such as a master node. Accordingly, failure of a single node can be compensated within the network.

In addition, it can be identified fast that synchronizing the databases of the nodes is required, particularly by comparing the hash values exchanged. Hence, an (upcoming) address collision can be identified at an early stage.

The protocol used by the network and the method is more simple since the protocol is decentralized due to the equal nodes. In fact, each node has the same configuration.

Additionally, prediction of the overhead as well as the performance of the communication is improved which yields in better scalability of the network and its operation.

The ad-hoc network may generally be configured to conduct a method for synchronizing data as outlined above. Thus, the respective components of the ad-hoc network are configured to perform the specific steps described above. The advantages mentioned above also apply for the ad-hoc network in a similar manner.

In the description above, the first node corresponds to a transmitting node whereas the second node corresponds to a receiving node. Generally, the first node may be assigned to the receiving node whereas the second node may correspond to the transmitting node.

Put another way, the respective roles with regard to the communication may be interchanged due to the fact that all nodes are equal.

In general, the nodes may communicate with each other via radio signals.

The time information relates to the remaining time till the next purge timeout.

Further features and advantages will be apparent from the following description as well as the accompanying drawings, to which reference is made. In the drawings:
- Figure 1 schematically shows an ad-hoc network according to the invention, and
- Figure 2 shows an overview that illustrates the synchronizing of two nodes of an ad-hoc network according to the invention wherein a method for synchronizing data according to the invention is used.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

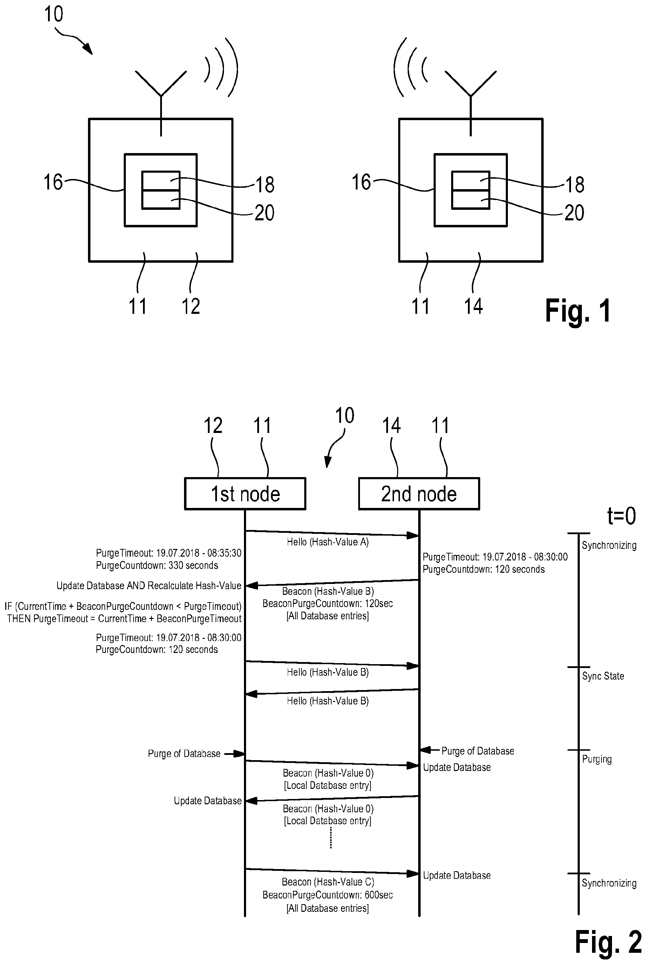

In Figure 1, an ad-hoc network 10 for synchronizing data between nodes 11 of the network 10 is shown wherein the nodes 11 correspond to participants of the network 10.

In the shown embodiment, the network comprises two nodes 11, namely a first network node 12 and a second network node 14. However, the network 10 may generally comprise several nodes 11. In fact, the number of nodes 11 in the network 10 dynamically changes over time.

As shown in Figure 1, each of the network nodes 11 has its own database 16 wherein the databases 16 each comprise an own portion 18 as well as an extended portion 20.

Generally, each node 12, 14 is configured to store data in the respective database 16, particularly address data.

For instance, each node 12, 14 is configured to store database content from the other node(s) 12, 14 that was received previously. Hence, each node 12, 14 is configured to extend its own database content, namely the one stored in the own portion 18, by the database content received from the other node(s) 12, 14.

In the shown embodiment, the network 10 comprises only two nodes 12, 14 for simplifying reasons. However, the network 10 may generally comprise several or rather a plurality of nodes 11.

According to the invention the first node 12 comprises a time information according to which the extended portion 20 of the database 16 is to be deleted.

The first node 12 transmits the time information to the second node 14 that is configured to receive the time information from the first node 12 and process the information appropriately.

Therefore, the second node 14 compares the time information received from the first node 12 with its own time information according to which the extended portion 20 of the database 16 is to be deleted, namely the extended portion 20 of the database 16 assigned to the second node 12.

If the second node 14 identifies that the time information received from the first node 12 is assigned to an earlier time than its own time information, the second node 14 will adapt the time information, namely its own time information.

The communication described for only two nodes 12, 14 of the network 10 takes place for all nodes 11 in the network 10. Thus, time information is exchanged between all nodes 11 of the network 10 ensuring that all nodes 11 have the same time information according to which the extended portion 20 of their respective databases 16 is to be deleted.

Then, the nodes 11, namely the first node 12 and the second node 14 in the shown embodiment, delete the extended portion 20 of their databases 16 at substantially the same time based on the time information that was exchanged previously.

For instance, the time information used for synchronizing the nodes 12, 14 may correspond to a purge countdown so that purging the databases 16 is synchronized by exchanging the respective time information. In other words, only a relative time such as "100 seconds" is exchanged between the nodes 12, 14.

Alternatively, the time information may be assigned to an absolute time. This may apply for networks 10 that are synchronized in time so that the absolute time is the same throughout all nodes 11 of the network 10.

Moreover, the time information may include a time interval so that the databases 16 of all nodes 11 do not have to be deleted exactly at the same time, but substantially at the same time.

After deleting the extended portion 18 of the respective databases 16, the nodes 12, 14 communicate with each other to synchronize their database contents again. This ensures that the databases 16 of all nodes 11, 12, 14 are equal to each other.

Since all nodes 11, 12, 14 of the network 10 have the same database contents stored in the respective databases 16, a decentralized data storage is provided by the protocol used by the network 10. In fact, this is ensured by synchronizing the respective database contents periodically.

Hereinafter, reference is made to Figure 2 that shows an overview which illustrates the synchronizing of both nodes 12, 14 along a timeline that starts at the top (t=0).

At the beginning, the first node 12 transmits a data packet, namely a hello data packet, that has a certain hash-value that is assigned to the database content of its database 16. In the shown embodiment, the hash-value is A.

The respective data packet is received by the second node 14 that in turn transmits another data packet, namely a beacon data packet, with another hash-value that is assigned to the database content of the database 16 of the second node 14. In the shown embodiment, the hash-value is B and, thus, the hash-values are different.

Thus, the hash-values are generally assigned to the database content of the respective database 16 of the nodes 11.

Furthermore, it is shown that each node 11, namely the first node 12 and the second node 14, has its own time information. In Figure 2, the time information is provided as an absolute time comprising a date and a time and as a purge countdown that runs.

Usually, only of both time information may be used, namely the purge countdown or the absolute time.

The beacon data packet transmitted by the second node 14 further comprises the time information of the second node 14 as well as all database entries. In the shown example, only the purge countdown is transmitted as time information.

The first node 12 that receives the beacon data packet from the second node 14 may update its down database 16 based upon the received database entries such that the database contents are synchronized. Then, the first node 12 recalculates the respective hash-value assigned thereto.

Furthermore, the receiving node, namely the first node 12, compares its own time information with the time information received from the transmitting node, namely the second node 14.

If the time inform received is assigned to an earlier time than its own time information, the receiving node, namely the first node 12, will adapt its own time information as indicated in Figure 2.

Then, the first node 12 transmits again a hello data packet that comprises the new hash-value B assigned to the database content of the database 16 of the first node 12 which was updated previously.

The second node 14 receives the hello data packet from the first node 12 and re-sends a hello data packet that also has the hash-value B. Thus, it is ensured that the databases 16 of both nodes 12, 14 are synchronized with each other since the respective hash-values are similar.

Then, the purge of the database(s) 16 takes place as the purge countdown to which the time information corresponds has finished. This is indicated in Figure 2 by "Purge of Database".

Afterwards, the first node 12 transmits a beacon data packet with a hash-value assigned to the database content of the database 16, namely a hash-value "0". The beacon data packet transmitted only comprises the local database entry of the database 16 of the first node 12 that is received by the second node 14.

The second node 14 updates its database by the local database entry of the first node 12 that was transmitted previously.

Further, the second node 14 also only transmits a beacon data packet towards the first node 12 that comprises the local database entry of the database 16 of the second node 14 that is received by the first node 12.

Then, the first node 12 may also update its database 16, particularly the extended portion 20, so that the database content of both databases 16 is synchronized.

In this synchronizing phase following the purging phase, the communication of the nodes 11 is restricted to transmitting only the respective local database entry of the database 16 for several intervals.

Afterwards, beacon data packets are exchanged that comprise a new time information as well as more information with regard to the respective database content of the transmitting node 11.

In the shown example, the first node 12 transmits a beacon data packet that has a hash-value C and a purge countdown of 600 seconds. In addition, the beacon data packet comprises all database entries of the respective database 16.

This protocol ensures that the nodes 11 of the network 10 are equal since they all comprise the respective database content that is synchronized periodically.

In addition, the database content is refreshed periodically due to the purging so that database content assigned to former nodes 11 of the network 10 is deleted in a periodic manner.

Generally, the nodes 11, 12, 14 only communicate with their direct neighbors (1-hop neighborhood).

Again, the method of synchronizing and purging the respective databases 16 is only described for two nodes 12, 14 of the network 10. However, the network 10 may comprise several or rather a plurality of nodes.

Generally, the synchronizing as well as the periodic purging of the database(s) 16 ensure that the protocol is efficient, fast and simple. Moreover, the protocol is robust as all nodes of the network 10 are equal.

Since the nodes 11 of the network 10 are equal, the first node 12 may correspond to the transmitting node or rather the receiving node. Hence, the second node 14 may correspond to the receiving node or rather the transmitting node.

In other words, the first node 12 may become the second 14 whereas the second node 14 becomes the first 12. Thus, the information and/or data packets may be exchanged between the nodes 11, 12, 14 in a bidirectional manner.

## Claims

1. A method for synchronizing data in an ad-hoc network (10) that comprises at least a first network node (12) and a second network node (14), wherein each network node (12, 14) has a database (16) comprising an extended portion (20) in which address data of the other node (12, 14) is stored, with the following steps:
- the first node (12) comprises a time information according to which the extended portion (20) of its database (16) is to be deleted,
- the first node (12) transmits the time information to the second node (14),
- the second node (14) receives the time information from the first node (12),
**characterized in that**
- the second node (14) compares the time information received from the first node (12) with its own time information according to which the extended portion (20) of its database (16) is to be deleted, and
- if the second node (14) identifies that the time information received from the first node (12) is assigned to an earlier time than its own time information, the second node (14) adapts its own time information such that the first node (12) deletes the extended portion (20) of its database (16) and the second node (14) deletes the extended portion (20) of its database (16) at substantially the same time based on the time information since after said adaptation of the time information by the second node (14) the first node (12) and the second node (14) have the same time information according to which the extended portion (20) of their respective databases (16) is to be deleted.

2. The method according to claim 1, wherein the time information corresponds to a purge countdown that indicates when the extended portion of the database shall be deleted.

3. The method according to claim 1, wherein the time information is an absolute time.

4. The method according to any of claims 1 and 2, wherein the time information includes a time interval.

5. The method according to any of the preceding claims, wherein the nodes (11, 12, 14) synchronize their database contents after deleting the extended portion (20) of the database (16).

6. The method according to any of the preceding claims, wherein the first node (12) and the second node (14) exchange data packets containing hash values of the database (16) to be synchronized, and wherein each node (12, 14) compares the hash value received with the hash value assigned to its own database (16), in particular wherein the synchronizing is initiated if the hash values are different.

7. The method according to any of the preceding claims, wherein the nodes (12, 14) of the network (10) only communicate with direct neighbors in the network (10).

8. An ad-hoc network (10) for synchronizing data, wherein the network (10) comprises at least a first network node (12) and a second network node (14), wherein each network node (12, 14) has a database (16), wherein each node (12, 14) is configured to receive database content from the other node (12, 14), wherein each database comprises an extended portion (20), in which address data of the other node (12,14) is stored, wherein the first node (12) comprises a time information according to which the extended portion (20) of the database (16) is to be deleted, wherein the first node (12) is configured to transmit the time information to the second node (14) that is configured to receive the time information from the first node (12), characteriezd in that the second node (14) is further configured to compare the time information received from the first node (12) with its own time information according to which the extended portion (20) of the database (16) is to be deleted in order to synchronize deletion of the extended portion (20) of the database (16), wherein the second node (14) is configured to adapt its own time information if the second node (14) identifies that the time information received from the first node (12) is assigned to an earlier time than its own time information, and wherein the first node (12) is configured to delete the extended portion (20) of its database (16) and the second node (14) is configured to delete the extended portion (20) of its database (16) at substantially the same time based on the time information since after said adaptation of the time information by the second node (14) the first node (12) and the second node (14) have the same time information according to which the extended portion (20) of their respective databases (16) is to be deleted.

9. The network (10) according to claim 8, wherein the time information corresponds to a purge countdown that indicates when the extended portion of the database shall be deleted or wherein the time information is an absolute time, in particular wherein the time information includes a time interval.

10. The network (10) according to any of claims 8 to 9, wherein the nodes (12, 14) are configured to synchronize their database contents after deleting the extended portion (20) of the database (16).

## Patentansprüche

1. Verfahren zum Synchronisieren von Daten in einem Ad-hoc-Netzwerk (10), das mindestens einen ersten Netzwerkknoten (12) und einen zweiten Netzwerkknoten (14) umfasst, wobei jeder Netzwerkknoten (12, 14) eine Datenbank (16) aufweist, umfassend einen erweiterten Abschnitt (20), in dem Adressdaten des anderen Knotens (12, 14) gespeichert sind, mit den folgenden Schritten:
- der erste Knoten (12) umfasst Zeitinformationen, gemäß denen der erweiterte Abschnitt (20) von seiner Datenbank (16) gelöscht werden soll,
- der erste Knoten (12) überträgt die Zeitinformationen an den zweiten Knoten (14),
- der zweite Knoten (14) empfängt die Zeitinformationen von dem ersten Knoten (12), **dadurch gekennzeichnet, dass**
- der zweite Knoten (14) die von dem ersten Knoten (12) empfangenen Zeitinformationen mit seinen eigenen Zeitinformationen vergleicht, gemäß denen der erweiterte Abschnitt (20) seiner Datenbank (16) gelöscht werden soll, und
- wenn der zweite Knoten (14) identifiziert, dass die von dem ersten Knoten (12) empfangenen Zeitinformationen einer früheren Zeit als ihre eigenen Zeitinformationen zugewiesen werden, der zweite Knoten (14) seine eigenen Zeitinformationen derart anpasst, dass der erste Knoten (12) den erweiterten Abschnitt (20) seiner Datenbank (16) löscht und der zweite Knoten (14) den erweiterten Abschnitt (20) seiner Datenbank (16) im Wesentlichen zu der gleichen Zeit basierend auf den Zeitinformationen löscht, da nach der Anpassung der Zeitinformationen durch den zweiten Knoten (14) der erste Knoten (12) und der zweite Knoten (14) die gleichen Zeitinformationen aufweisen, gemäß denen der erweiterte Abschnitt (20) ihrer jeweiligen Datenbanken (16) gelöscht werden soll.

2. Verfahren nach Anspruch 1, wobei die Zeitinformationen einem Bereinigungs-Countdown entsprechen, der angibt, wann der erweiterte Abschnitt der Datenbank gelöscht werden soll.

3. Verfahren nach Anspruch 1, wobei die Zeitinformationen eine absolute Zeit sind.

4. Verfahren nach einem der Ansprüche 1 und 2, wobei die Zeitinformationen ein Zeitintervall einschließen.

5. Verfahren nach einem der vorstehenden Ansprüche, wobei die Knoten (11, 12, 14) ihre Datenbankinhalte nach dem Löschen des erweiterten Abschnitts (20) der Datenbank (16) synchronisieren.

6. Verfahren nach einem der vorstehenden Ansprüche, wobei der erste Knoten (12) und der zweite Knoten (14) Datenpakete austauschen, die Hash-Werte der Datenbank (16), die synchronisiert werden sollen, enthalten und wobei jeder Knoten (12, 14) den Hash-Wert, der empfangen wird, mit dem Hash-Wert, der der eigenen Datenbank (16) zugewiesen ist, vergleicht, insbesondere wobei das Synchronisieren eingeleitet wird, wenn die Hash-Werte unterschiedlich sind.

7. Verfahren nach einem der vorstehenden Ansprüche, wobei die Knoten (12, 14) des Netzwerks (10) nur mit direkten Nachbarn in dem Netzwerk (10) kommunizieren.

8. Ad-hoc-Netzwerk (10) zum Synchronisieren von Daten, wobei das Netzwerk (10) mindestens einen ersten Netzwerkknoten (12) und einen zweiten Netzwerkknoten (14) umfasst, wobei jeder Netzwerkknoten (12, 14) eine Datenbank (16) aufweist, wobei jeder Knoten (12, 14) konfiguriert ist, um einen Datenbankinhalt von dem anderen Knoten (12, 14) zu empfangen, wobei jede Datenbank einen erweiterten Abschnitt (20) umfasst, in dem Adressdaten des anderen Knotens (12, 14) gespeichert sind,
wobei der erste Knoten (12)
Zeitinformationen umfasst, gemäß denen der erweiterte Abschnitt (20) der Datenbank (16) gelöscht werden soll, wobei der erste Knoten (12) konfiguriert ist, um die Zeitinformationen an den zweiten Knoten (14) zu übertragen, der konfiguriert ist, um die Zeitinformationen von dem ersten Knoten (12) zu empfangen, **dadurch gekennzeichnet, dass**
der zweite Knoten (14) ferner konfiguriert ist, um die von dem ersten Knoten (12) empfangenen Zeitinformationen mit seinen eigenen Zeitinformationen zu vergleichen, gemäß denen der erweiterte Abschnitt (20) der Datenbank (16) gelöscht werden soll, um das Löschen des erweiterten Abschnitts (20) der Datenbank (16) zu synchronisieren, wobei der zweite Knoten (14) konfiguriert ist, um seine eigenen Zeitinformationen anzupassen, wenn der zweite Knoten (14) identifiziert, dass die von dem ersten Knoten (12) empfangenen Zeitinformationen einer früheren Zeit als seine eigenen Zeitinformationen zugewiesen werden, und wobei der erste Knoten (12) konfiguriert ist, um den erweiterten Abschnitt (20) von seiner Datenbank (16) zu löschen, und der zweite Knoten (14) konfiguriert ist, um den erweiterten Abschnitt (20) seiner Datenbank (16) im Wesentlichen zu der gleichen Zeit basierend auf den Zeitinformationen zu löschen, da nach der Anpassung der Zeitinformationen durch den zweiten Knoten (14) der erste Knoten (12) und der zweite Knoten (14) die gleichen Zeitinformationen aufweisen, gemäß denen der erweiterte Abschnitt (20) ihrer jeweiligen Datenbanken (16) gelöscht werden soll.

9. Netzwerk (10) nach Anspruch 8, wobei die Zeitinformationen einem Bereinigungs-Countdown entsprechen, der angibt, wann der erweiterte Abschnitt der Datenbank gelöscht werden soll oder wobei die Zeitinformationen eine absolute Zeit sind, insbesondere wobei die Zeitinformationen ein Zeitintervall einschließen.

10. Netzwerk (10) nach einem der Ansprüche 8 bis 9, wobei die Knoten (12, 14) konfiguriert sind, um ihre Datenbankinhalte nach dem Löschen des erweiterten Abschnitts (20) der Datenbank (16) zu synchronisieren.

## Revendications

1. Procédé permettant de synchroniser des données dans un réseau ad hoc (10) qui comprend au moins un premier noeud de réseau (12) et un second noeud de réseau (14), dans lequel chaque noeud de réseau (12, 14) possède une base de données (16) comprenant une partie étendue (20) dans laquelle des données d'adresse de l'autre noeud (12, 14) sont stockées, avec les étapes suivantes :
- le premier noeud (12) comprend des informations temporelles selon lesquelles la partie étendue (20) de sa base de données (16) doit être supprimée,
- le premier noeud (12) transmet les informations temporelles au second noeud (14),
- le second noeud (14) reçoit les informations temporelles à partir du premier noeud (12), **caractérisé en ce que**
- le second noeud (14) compare les informations temporelles reçues à partir du premier noeud (12) avec ses propres informations temporelles selon lesquelles la partie étendue (20) de sa base de données (16) doit être supprimée, et
- si le second noeud (14) identifie que les informations temporelles reçues à partir du premier noeud (12) sont attribuées à un moment antérieur à ses propres informations temporelles, le second noeud (14) adapte ses propres informations temporelles de sorte que le premier noeud (12) supprime la partie étendue (20) de sa base de données (16) et que le second noeud (14) supprime la partie étendue (20) de sa base de données (16) sensiblement au même moment sur la base des informations temporelles, puisqu'après ladite adaptation des informations temporelles par le second noeud (14), le premier noeud (12) et le second noeud (14) possèdent les mêmes informations temporelles selon lesquelles la partie étendue (20) de leurs bases de données (16) respectives doit être supprimée.

2. Procédé selon la revendication 1, dans lequel les informations temporelles correspondent à un compte à rebours de purge qui indique quand la partie étendue de la base de données doit être supprimée.

3. Procédé selon la revendication 1, dans laquelle les informations temporelles sont un temps absolu.

4. Procédé selon l'une quelconque des revendications 1 et 2, dans lequel les informations temporelles comportent un intervalle de temps.

5. Procédé selon l'une quelconque des revendications précédentes, dans lequel les noeuds (11, 12, 14) synchronisent le contenu de leur base de données après avoir supprimé la partie étendue (20) de la base de données (16).

6. Procédé selon l'une quelconque des revendications précédentes, dans lequel le premier noeud (12) et le second noeud (14) échangent des paquets de données contenant les valeurs de hachage de la base de données (16) à synchroniser, et dans lequel chaque noeud (12, 14) compare la valeur de hachage reçue avec la valeur de hachage attribuée à sa propre base de données (16), en particulier dans lequel la synchronisation est initiée si les valeurs de hachage sont différentes.

7. Procédé selon l'une quelconque des revendications précédentes, dans lequel les noeuds (12, 14) du réseau (10) ne communiquent qu'avec leurs voisins directs dans le réseau (10).

8. Réseau ad hoc (10) permettant de synchroniser des données, dans lequel le réseau (10) comprend au moins un premier noeud de réseau (12) et un second noeud de réseau (14), dans lequel chaque noeud de réseau (12, 14) possède une base de données (16), dans lequel chaque noeud (12, 14) est configuré pour recevoir le contenu de la base de données à partir de l'autre noeud (12, 14), dans lequel chaque base de données comprend une partie étendue (20) dans laquelle des données d'adresse de l'autre noeud (12, 14) sont stockées,
dans lequel le premier noeud (12)
comprend des informations temporelles selon lesquelles la partie étendue (20) de la base de données (16) doit être supprimée, dans lequel le premier noeud (12) est configuré pour transmettre les informations temporelles au second noeud (14) qui est configuré pour recevoir les informations temporelles à partir du premier noeud (12), **caractérisé en ce que**
le second noeud (14) est en outre configuré pour comparer les informations temporelles reçues à partir du premier noeud (12) avec ses propres informations temporelles selon lesquelles la partie étendue (20) de la base de données (16) doit être supprimée afin de synchroniser la suppression de la partie étendue (20) de la base de données (16), dans lequel le second noeud (14) est configuré pour adapter ses propres informations temporelles si le second noeud (14) identifie que les informations temporelles reçues à partir du premier noeud (12) sont attribuées à un temps antérieur à ses propres informations temporelles, et dans lequel le premier noeud (12) est configuré pour supprimer la partie étendue (20) de sa base de données (16) et le second noeud (14) est configuré pour supprimer la partie étendue (20) de sa base de données (16) sensiblement en même temps sur la base des informations temporelles, puisqu'après ladite adaptation des informations temporelles par le second noeud (14), le premier noeud (12) et le second noeud (14) possèdent les mêmes informations temporelles selon lesquelles la partie étendue (20) de leurs bases de données (16) respectives doit être supprimée.

9. Réseau (10) selon la revendication 8, dans lequel les informations temporelles correspondent à un compte à rebours de purge qui indique quand la partie étendue de la base de données doit être supprimée ou dans lequel les informations temporelles sont un temps absolu, en particulier dans lequel les informations temporelles comportent un intervalle de temps.

10. Réseau (10) selon l'une quelconque des revendications 8 à 9, dans lequel les noeuds (12, 14) sont configurés pour synchroniser leur contenu de base de données après la suppression de la partie étendue (20) de la base de données (16).
